# EUROPÄISCHE PATENTSCHRIFT

(11) **EP 0 797 386 B1**
(45) Veröffentlichungstag und Bekanntmachung des Hinweises auf die Patenterteilung: **24.05.2000**
(21) Anmeldenummer: 95941071.3
(22) Anmeldetag: 05.12.1995
(51) Int. Cl.: A01N 43/42, A01N 37/50, A01N 37/36, A01N 43/54, A01N 43/653, A01N 43/36

(54) **FUNGIZIDE MISCHUNG**
FUNGICIDAL MIXTURE
MELANGE FONGICIDE

(30) Priorität: 16.12.1994 DE 4444911
(43) Veröffentlichungstag der Anmeldung: 01.10.1997
(60) Teilanmeldung: 98123302.6
(73) Patentinhaber: BASF AKTIENGESELLSCHAFT, 67056 Ludwigshafen (DE)
(72) Erfinder: WAGNER, Oliver, D-66450 Bexbach (DE); EICKEN, Karl, D-67157 Wachenheim (DE); BAYER, Herbert, D-68159 Mannheim (DE); SAUTER, Hubert, D-68167 Mannheim (DE); AMMERMANN, Eberhard, D-64646 Heppenheim (DE); LORENZ, Gisela, D-67434 Hambach (DE)
(86) Internationale Anmeldenummer: EP9504785
(87) Internationale Veröffentlichungsnummer: WO9618299

(56) Entgegenhaltungen:
- EP-A- 0 326 330
- EP-A- 0 531 837
- DATABASE WPI Section Ch, Week 9351 Derwent Publications Ltd., London, GB; Class C02, AN 93-408819 XP002002639 & JP,A,05 306 203 (MITSUI TOATSU CHEM INC) , 19.November 1993

## Beschreibung

Die vorliegende Erfindung betrifft eine fungizide Mischung, welche
a) eine Verbindung der Formel I 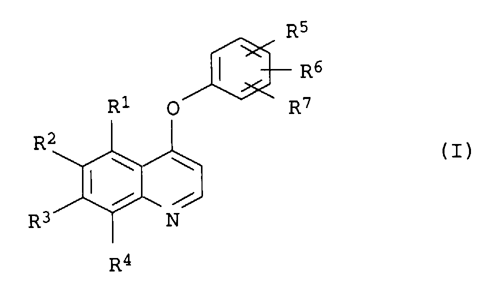 ihr N-Oxid oder eines ihrer Salze, in der die Reste die folgende Bedeutung haben:
   - R¹,R²,R³,R⁴: unabhängig voneinander: Wasserstoff, Hydroxy, Nitro, Halogen, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio;
   - R⁵, R⁶, R⁷: unabhängig voneinander: Wasserstoff, Hydroxy, Cyano, Nitro, Halogen, C₁-C₇-Alkyl, C₁-C₇-Halogenalkyl, C₁-C₇-Alkoxy, C₁-C₇-Halogenalkoxy, C₁-C₇-Alkylthio, C₁-C₇-Halogenalkylthio, C₁-C₇-Hydroxyalkyl, C₂-C₄-Acyl, Aryl, Aryloxy, wobei die Reste mit Aryl ihrerseits eine bis drei der folgenden Gruppen tragen können: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, und
b) eine Verbindung der Formel II, 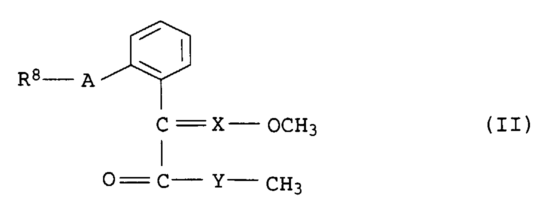 in der die Reste die folgende Bedeutung haben:
   - R⁸: Phenyl, welches eine bis drei der folgenden Gruppen tragen kann: Cyano, Halogen, C₁-C₄-Alkyl, C₁-C₂-Halogenalkyl und C₁-C₄-Alkoxy, oder
   Pyrimidyl, welches eine C₁-C₃-Alkylgruppe und/oder eine Phenoxygruppe tragen kann, wobei die Phenoxygruppe ihrerseits einen bis drei der folgenden Substituenten tragen kann: Cyano, Halogen, C₁-C₄-Alkyl, C₁-C₂-Halogenalkyl und C₁-C₄-Alkoxy;
   - A: Sauerstoff oder Oxymethylen (-OCH₂-);
   - X: CH oder N;
   - Y: Sauerstoff oder NR, wobei R für Wasserstoff, C₁-C₃-Alkyl oder C₁-C₃-Alkoxy steht,
in einer synergistisch wirksamen Menge enthält.

Außerdem betrifft die Erfindung Verfahren zur Bekämpfung von Schadpilzen mit den Verbindungen I und II oder sie enthaltenden synergistischen Mischungen und die Verwendung der Verbindungen I bzw. der Verbindungen II zur Herstellung derartiger Mischungen.

Verbindungen der Formel I, deren fungizide Wirkung sowie deren Herstellung, sind bekannt aus US-A 5 240 940 sowie aus ACS Sympos. Ser. 443, Seite 538 bis Seite 552 (1991).

Weiterhin sind Verbindungen der Formel II, ihre Herstellung und ihre Wirkung gegen Schadpilze aus der Literatur bekannt (EP-A 253 213, EP-A 382 375, EP-A 398 692, EP-A 400 417).

Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an ausgebrachten Wirkstoffen eine verringerter Gesamtmenge an ausgebrachten Wirkstoffen eine verbesserte Wirkung gegen Schadpilze aufweisen (synergistische Mischungen).

Demgemäß wurden die eingangs definierten Mischungen gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Verbindungen I oder II allein.

Die Verbindungen der Formel II können in Bezug auf die C=X-Doppelbindung in der E- oder der Z-Konfiguration (in Bezug auf die Gruppierung OCH₃ und CO-YCH₃) vorliegen. Demgemäß können sie in der erfindungsgemäßen Mischung entweder als reine Isomere oder als E/Z-Isomerenmischung Verwendung finden. Bevorzugt findet die E/Z-Isomerenmischung oder das E-Isomere Anwendung, wobei in vielen Fällen das E-Isomere besonders bevorzugt ist.

Die Verbindungen I und II sind wegen des basischen Charakters des Ring-Stickstoffatoms bzw. der NH-Gruppierung in der Lage, mit anorganischen oder organischen Säuren oder mit Metallionen Salze zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise in Betracht: Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl, welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl, welche eine oder zwei Phosphorsäurereste tragen), wobei die Alkyl- bzw. Arylreste weitere Substituenten tragen können, z.B. p-Toluolsulfonsäure, Salicylsäure, p-Aminosalicylsäure, 2-Phenoxybenzoesäure, 2-Acetoxybenzoesäure etc.

Als Metallionen kommen insbesondere die Ionen der Elemente der zweiten Hauptgruppe, insbesondere Calcium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink in Betracht. Besonders bevorzugt sind die Metallionen der Elemente der Nebengruppen der vierten Periode. Die Metalle können dabei in den verschiedenen ihnen zukommenden Wertigkeiten vorliegen.

Ferner lassen sich die Verbindungen I in an sich bekannter Weise in die N-Oxide überführen (vgl. US-A 5 240 940).

Bevorzugt werden für die Bereitstellung der erfindungsgemäßen fungiziden Mischungen Verbindungen I, ihre Salze oder N-Oxide verwendet, in denen die Reste die folgende Bedeutung haben:
- R¹,R²,R³,R⁴: unabhängig voneinander Wasserstoff, Halogen, C₁-C₂-Alkyl, C₁-C₂-Halogenalkyl, C₁-C₂-Alkoxy, C₁-C₂-Halogenalkoxy der C₁-C₂-Alkylthio;
- R⁵,R⁶,R⁷: unabhängig voneinander Wasserstoff, Nitro, Cyano, Halogen, C₁-C₄-Alkyl, C₁-C₄-Halogenalkyl, C₁-C₄-Alkoxy oder Phenyl.

Im Hinblick auf die Anwendbarkeit als Mischungspartner sind insbesondere die Verbindungen Ia gemäß der folgenden Tabelle 1 bevorzugt.

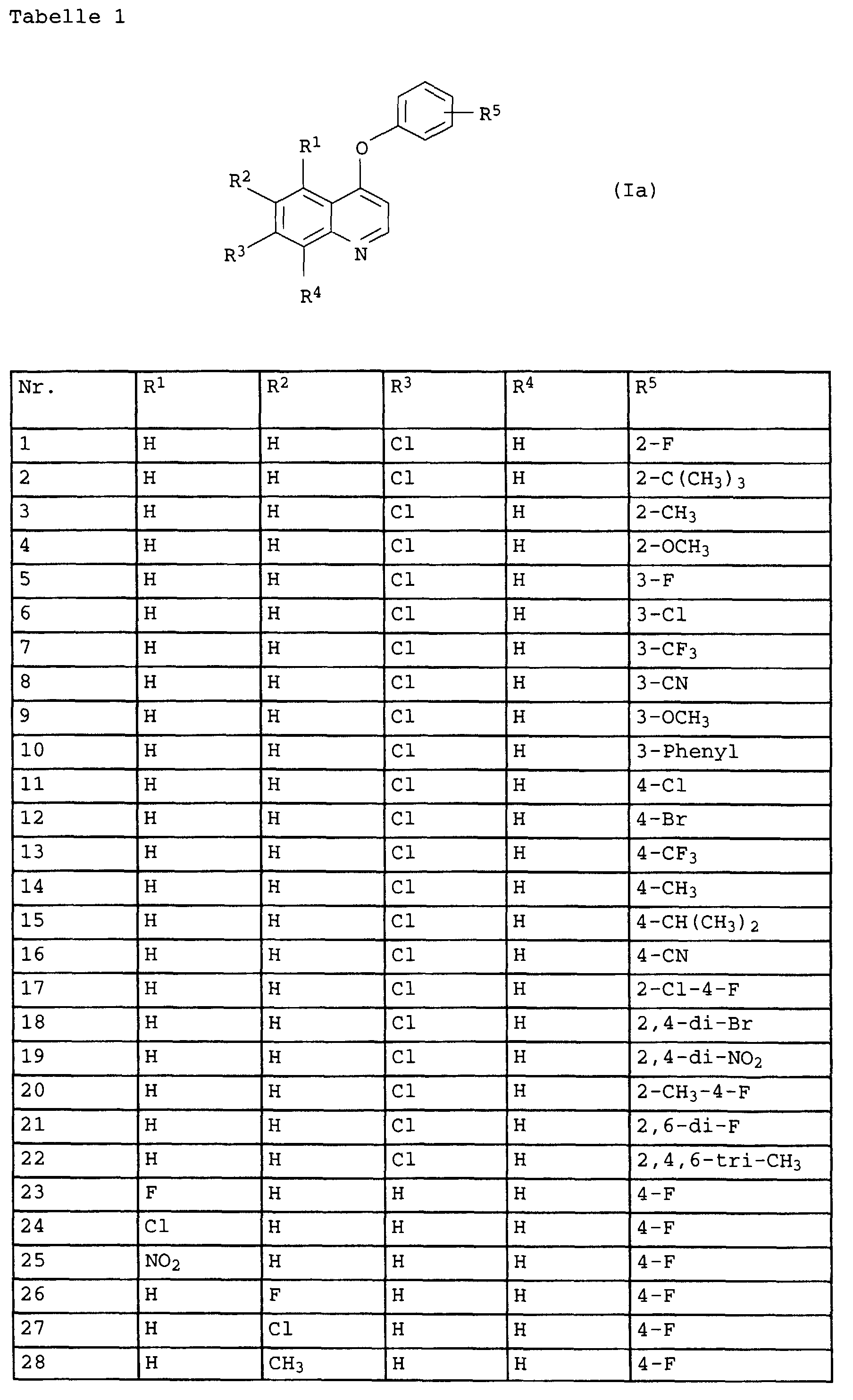

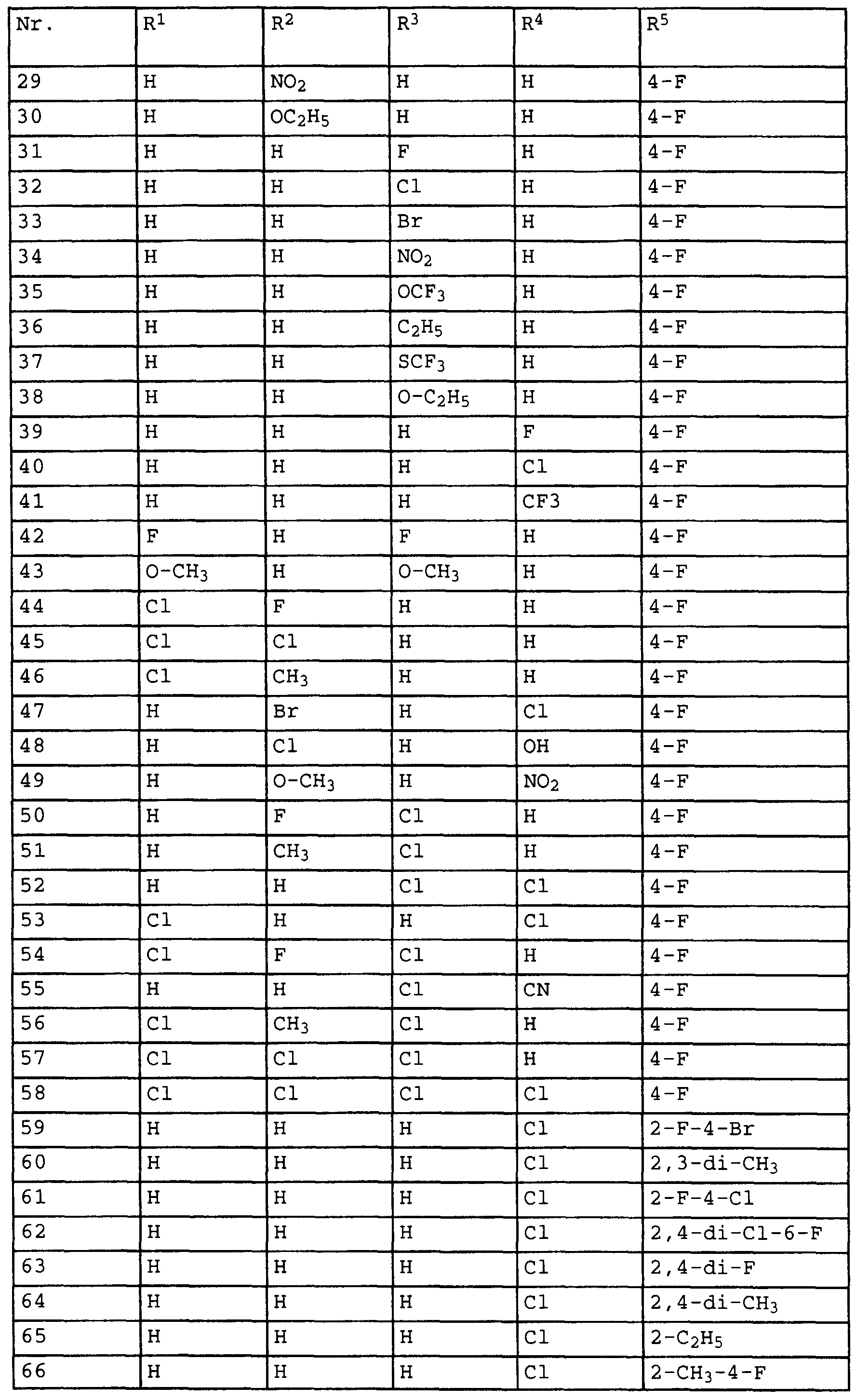

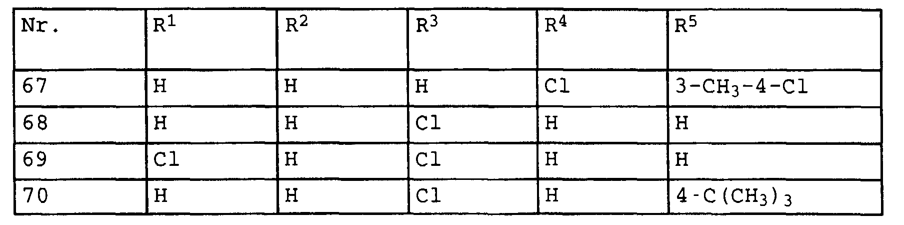

Ganz besonders bevorzugt sind die Verbindungen Ia gemäß Tabelle 2 sowie das Hydrochlorid und das N-Oxid der darin genannten Verbindung 8.

**Tabelle 2**

| Nr. | R¹ | R² | R³ | R⁴ | R⁵ |
|---|---|---|---|---|---|
| 1 | H | H | Cl | H | 2-Cl |
| 2 | H | H | Cl | H | 2-Br |
| 3 | H | H | Cl | H | 2-CN |
| 4 | H | H | Cl | H | 2-CF₃ |
| 5 | H | H | Cl | H | 2-NO₂ |
| 6 | H | H | Cl | H | 4-F |
| 7 | H | H | Cl | H | 2,4-di-F |
| 8 | Cl | H | Cl | H | 4-F |
| 9 | H | H | H | Cl | 2-Cl-4-F |
| 10 | CH₃ | H | CH₃ | H | 4-F |

Die in oder bei den Tabellen 1 und 2 genannten Verbindungen der Formel Ia sind bekannt aus US-A 5 240 940 und/oder ACS Sympos. Ser. 443, Seite 538 bis Seite 552 (1991).

Bevorzugt werden für die Bereitstellung der erfindungsgemäßen fungiziden Mischungen Verbindungen II 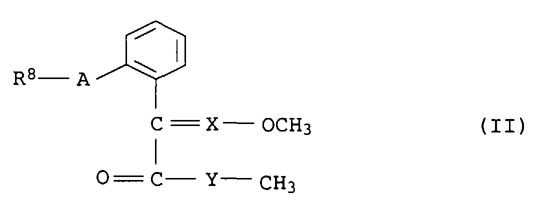 verwendet, in denen die Reste die folgenden Bedeutungen haben:
- R⁸: Phenyl, welches eine bis drei der folgenden Gruppen tragen kann: Cyano, Halogen, C₁-C₂-Alkyl, C₁-C₂-Halogenalkyl und C₁-C₂-Alkoxy, oder
Pyrimidyl, welches eine C₁-C₂-Alkylgruppe und/oder eine Phenoxygruppe tragen kann, wobei die Phenoxygruppe ihrerseits einen bis drei der folgenden Substituenten tragen kann: Cyano, Halogen, C₁-C₂-Alkyl, C₁-C₂-Halogenalkyl und C₁-C₂-Alkoxy,
- A: Sauerstoff oder Oxymethylen (-OCH₂-);
- X: CH oder N;
- Y: Sauerstoff oder NR, wobei R für Wasserstoff, C₁-C₂-Alkyl und C₁-C₂-Alkoxy steht.

Besonders bevorzugt sind fungizide Mischungen, welche Verbindungen II enthalten, in denen die Reste die folgenden Bedeutungen haben:
- R⁸: Phenyl, welches eine bis drei der folgenden Gruppen tragen kann: Halogen, Methyl, Trifluormethyl und Methoxy,
- A: Oxymethylen (-OCH₂-),
- X: CH oder N;
- Y: Sauerstoff oder NR, wobei R für Wasserstoff, Methyl und Methoxy steht.

Besonders bevorzugt sind auch fungizide Mischungen, welche Verbindungen II enthalten, in denen die Reste die folgende Bedeutung haben:
- R⁸: Pyrimidyl, insbesondere Pyrimidin-4,6-diyl, welches eine Methylgruppe und/oder eine Phenoxygruppe tragen kann, wobei die Phenoxygruppe ihrerseits einen bis drei der folgenden Substituenten tragen kann: Cyano, Halogen, Methyl, Trifluormethyl und Methoxy,
- A: Sauerstoff;
- X: CH oder N;
- Y: Sauerstoff oder NR, wobei R für Wasserstoff, Methyl oder Methoxy steht.

Besonders bevorzugt sind des weiteren Mischungen, welche eine Verbindung der Formel II enthalten, in der R⁸ für 2-Methylphenyl oder 2,5-Dimethylphenyl, A für Oxymethylen, X für N steht und Y Sauerstoff oder NH bedeutet.

Daneben sind Mischungen bevorzugt, welche eine Verbindung der Formel II enthalten, in der R⁸ für 2-Methylphenyl oder 2,5-Dimethylphenyl steht, A für Oxymethylen, X für N steht und Y NH bedeutet.

Außerdem werden Mischungen bevorzugt, welche eine Verbindung der Formel II enthalten, in der R⁸ für 6-(2-Cyanophenoxy)pyrimidin-4-yl steht, A für Sauerstoff, X für CH steht und Y Sauerstoff bedeutet.

Im Hinblick auf die Anwendbarkeit als Mischungspartner sind insbesondere die Verbindungen II.A, II.B, II.C, II.D und II.E bevorzugt.

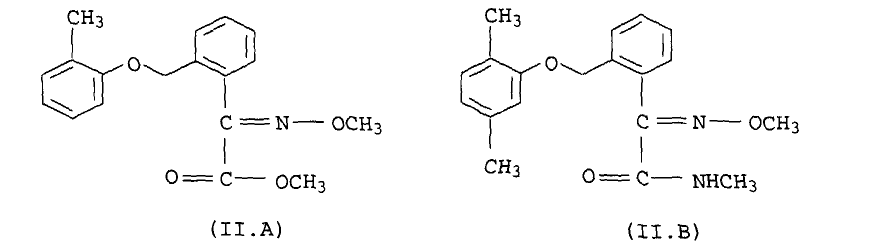

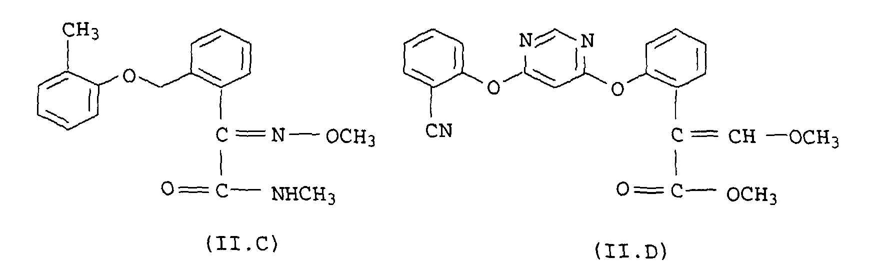

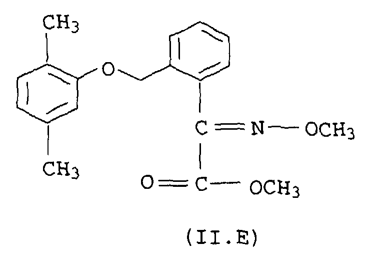

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die Verbindungen I und II, gleichzeitig, und zwar gemeinsam oder getrennt oder nacheinander ausgebracht, zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander ausgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0,1:1, vorzugsweise 5:1 bis 0,2:1, insbesondere 3:1 bis 0,3:1 angewendet.

Die Aufwandmengen der erfindungsgemäßen Mischungen liegen je nach Art des gewünschten Effekts bei 0,01 bis 3 kg/ha, vorzugsweise 0,1 bis 1,5 kg/ha, insbesondere 0,4 bis 1,0 kg/ha. Die Aufwandmengen liegen dabei für die Verbindungen I bei 0,01 bis 0,5 kg/ha, vorzugsweise 0,05 bis 0,5 kg/ha, insbesondere 0,05 bis 0,2 kg/ha. Die Aufwandmengen für die Verbindungen II liegen entsprechend bei 0,1 bis 1,0 kg/ha, vorzugsweise 0,4 bis 1,0 kg/ha, insbesondere 0,4 bis 0,8 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I und II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Anwendungsbeispiel: Wirkung gegen Weizenmehltau (kurativ)

Blätter von in Töpfen gewachsenen Weizenkeimlingen der Sorte "Frühgold" wurden mit Sporen des Weizenmehltaus (Erysiphe graminis f. sp. tritici) inokuliert und 24 Stunden später mit wäßrigen Wirkstoffaufbereitungen, die 80 Gew.-% Wirkstoff und 20 Gew.-% Emulgiermittel in der Trockensubstanz enthielten, bis zur Tropfnässe besprüht. Nach dem Antrocknen der wäßrigen Wirkstoffaufbereitungen wurden die Versuchspflanzen anschließend im Gewächshaus bei Temperaturen zwischen 20 und 22 °C und 75 bis 80 % relativer Luftfeuchtigkeit aufgestellt. Nach 7 Tagen wurde das Ausmaß der Mehltauentwicklung ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel ermittelt (S. R. Colby "Calculating synergistic and antagonistic responses of herbicide combinations", Weeds 15, Seiten 20 bis 22 (1967)) und mit den beobachteten Wirkungsgraden verglichen.

Die Versuche wurden mit den folgenden 3 Verbindungen durchgeführt, denen aus Gründen der Übersicht die Bezeichnungen (A), (B) und (C) zugeordnet wurden:

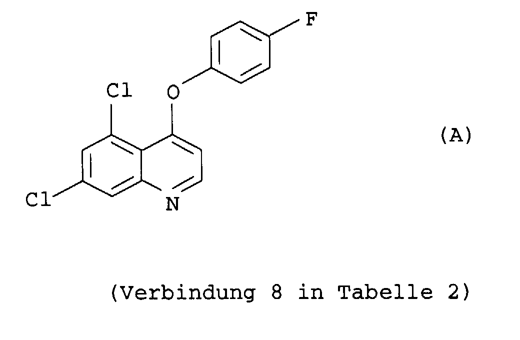

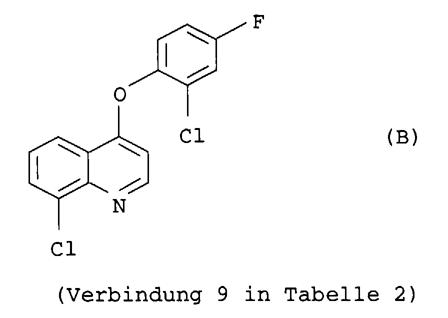

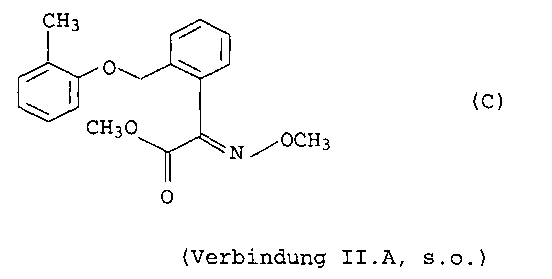

### A) Unbehandelte Kontrolle: 44% Befall

**Tabelle A.1:**

| Wirkungsgrad der einzelnen Wirkstoffe | | |
|---|---|---|
| Wirkstoff | Wirkstoffkonzentration in der Spritzbrühe [ppm] | Wirkungsgrad [% der unbehandelten Kontrolle] |
| (A) | 16 | 53 |
| | 4 | 5 |
| (B) | 16 | 5 |
| (C) | 1 | 64 |
| | 0,25 | 0 |

**Tabelle A.2:**

| Wirkungsgrad der Mischung | | |
|---|---|---|
| Wirkstoffmischung | beobachteter Wirkungsgrad | erwarteter Wirkungsgrad |
| 16 ppm (A) + 1 ppm (C); Mischungsverhältnis 16:1 | 100 | 83 |
| 4 ppm (A) + 0,25 ppm (C); Mischungsverhältnis 16:1 | 53 | 5 |
| 16 ppm (B) + 1 ppm (C); Mischungsverhältnis 16:1 | 98 | 66 |

Versuchsergebnis: Der beobachtete Wirkungsgrad ist in allen Mischungsverhältnissen höher, als nach der Colby-Formel vorausberechnet.

## Patentansprüche

1. Fungizide Mischung, enthaltend
a) eine Verbindung der Formel I 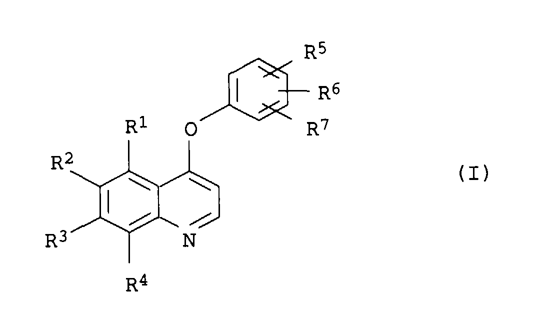 ihr N-Oxid oder eines ihrer Salze, in der die Reste die folgende Bedeutung haben:
R¹,R²,R³,R⁴ unabhängig voneinander: Wasserstoff, Hydroxy, Nitro, Halogen, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio;
R⁵,R⁶,R⁷ unabhängig voneinander: Wasserstoff, Hydroxy, Cyano, Nitro, Halogen, C₁-C₇-Alkyl, C₁-C₇-Halogenalkyl, C₁-C₇-Alkoxy, C₁-C₇-Halogenalkoxy, C₁-C₇-Alkylthio, C₁-C₇-Halogenalkylthio, C₁-C₇-Hydroxyalkyl, C₂-C₄-Acyl, Aryl, Aryloxy, wobei die Reste mit Aryl ihrerseits eine bis drei der folgenden Gruppen tragen können: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, und
b) eine Verbindung der Formel II, 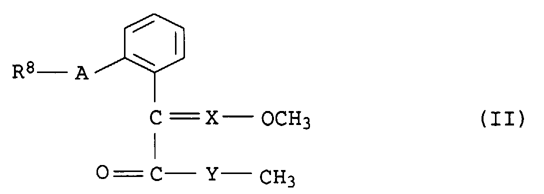 in der die Reste die folgende Bedeutung haben:
R⁸ Phenyl, welches eine bis drei der folgenden Gruppen tragen kann: Cyano, Halogen, C₁-C₄-Alkyl, C₁-C₂-Halogenalkyl und C₁-C₄-Alkoxy, oder
Pyrimidyl, welches eine C₁-C₃-Alkylgruppe und/oder eine Phenoxygruppe tragen kann, wobei die Phenoxygruppe ihrerseits einen bis drei der folgenden Substituenten tragen kann: Cyano, Halogen, C₁-C₄-Alkyl, C₁-C₂-Halogenalkyl und C₁-C₄-Alkoxy;
A Sauerstoff oder Oxymethylen (-OCH₂-);
X CH oder N;
Y Sauerstoff oder NR, wobei R für Wasserstoff, C₁-C₃-Alkyl oder C₁-C₃-Alkoxy steht,
in einer synergistisch wirksamen Menge.

2. Fungizide Mischung nach Anspruch 1, dadurch gekennzeichnet, daß das Gewichtsverhältnis der Verbindung I zu der Verbindung II 10:1 bis 0,1:1 beträgt.

3. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit einer Verbindung der Formel I und einer Verbindung II gemäß Anspruch 1 behandelt.

4. Verfahren nach Anspruch 3, dadurch gekennzeichnet, daß man die Verbindung I und die Verbindung II gleichzeitig, und zwar gemeinsam oder getrennt, oder nacheinander ausbringt.

5. Verwendung einer der Verbindungen I gemäß Anspruch 1 zur Herstellung von fungizid wirksamen synergistischen Mischungen gemäß Anspruch 1.

6. Verwendung einer der Verbindungen II gemäß Anspruch 1 zur Herstellung von fungizid wirksamen synergistischen Mischungen gemäß Anspruch 1.

## Claims

1. A fungicidal mixture comprising
a) a compound of the formula I 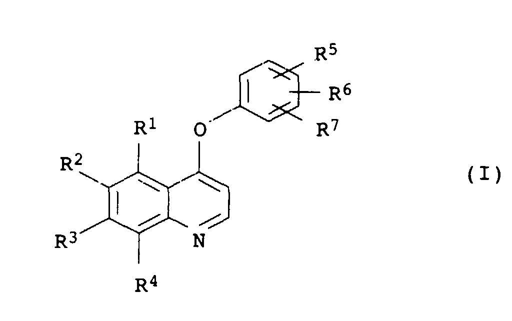 an N-oxide or a salt thereof, where the radicals are defined as follows:
R¹,R²,R³ and R⁴ independently of one another are: hydrogen, hydroxyl, nitro, halogen, C₁-C₄-alkyl, C₁-C₄-haloalkyl, C₁-C₄-alkoxy, C₁-C₄-haloalkoxy, C₁-C₄-alkylthio, C₁-C₄-haloalkylthio;
R⁵,R⁶,R⁷ independently of one another are: hydrogen, hydroxyl, cyano, nitro, halogen, C₁-C₇-alkyl, C₁-C₇-haloalkyl, C₁-C₇-alkoxy, C₁-C₇-haloalkoxy, C₁-C₇-alkylthio, C₁-C₇-haloalkylthio, C₁-C₇-hydroxyalkyl, C₂-C₄-acyl, aryl or aryloxy, it being possible for the radicals with aryl to have attached to them, in turn, one to three of the following groups: cyano, nitro, halogen, C₁-C₄-alkyl, C₁-C₄-haloalkyl, C₁-C₄-alkoxy, C₁-C₄-haloalkoxy, C₁-C₄-alkylthio and C₁-C₄-haloalkylthio, and
b) a compound of the formula II, 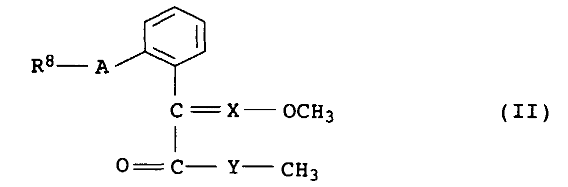 where the radicals are defined as follows:
R⁸ is phenyl which can have attached to it one to three of the following groups: cyano, halogen, C₁-C₄-alkyl, C₁-C₂-haloalkyl and C₁-C₄-alkoxy, or
pyrimidyl which can have attached to it a C₁-C₃-alkyl group and/or a phenoxy group, it being possible for the phenoxy group to have attached to it, in turn, one to three of the following substituents: cyano, halogen, C₁-C₄-alkyl, C₁-C₂-haloalkyl and C₁-C₄-alkoxy;
A is oxygen or oxymethylene (-OCH₂-);
X is CH or N;
Y is oxygen or NR, where R is hydrogen, C₁-C₃-alkyl or C₁-C₃-alkoxy,
in a synergistically active amount.

2. A fungicidal mixture as claimed in claim 1, wherein the ratio by weight of the compound I to the compound II is 10:1 to 0.1:1.

3. A method of controlling fungal pests, which comprises treating the fungal pests, their environment or the plants, seeds, soils, surfaces, materials or rooms which are to be protected against them with a compound of the formula I and a compound II as claimed in claim 1.

4. A method as claimed in claim 3, wherein compound I and compound II are applied simultaneously, i.e. jointly or separately, or in succession.

5. The use of one of the compounds I as claimed in claim 1 for the preparation of fungicidally active synergistic mixtures as claimed in claim 1.

6. The use of one of the compounds II as claimed in claim 1 for the preparation of fungicidally active synergistic mixtures as claimed in claim 1.

## Revendications

1. Mélange fongicide, contenant
a) un composé de formule I 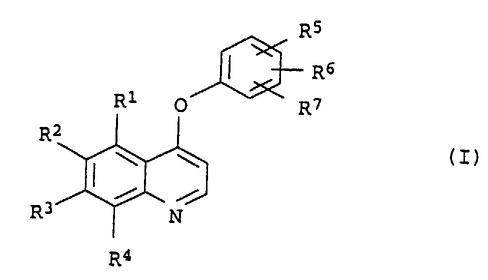 son N-oxyde ou l'un de ses sels, où les restes ont la signification suivante:
R¹, R², R³, R⁴ indépendamment l'un de l'autre: hydrogène, hydroxy, nitro, halogéno, alkyle en C₁-C₄, halogénoalkyle en C₁-C₄, alcoxy en C₁-C₄, halogénoalcoxy en C₁-C₄, alkylthio en C₁-C₄, halogénoalkylthio en C₁-C₄,
R⁵, R⁶, R⁷ indépendamment l'un de l'autre: hydrogène, hydroxy, cyano, nitro, halogéno, alkyle en C₁-C₇, halogénoalkyle en C₁-C₇, alcoxy en C₁-C₇, halogénoalcoxy en C₁-C₇, alkylthio en C₁-C₇, halogénoalkylthio en C₁-C₇, hydroxyalkyle en C₁-C₇, acyle en C₂-C₄, aryle, aryloxy, tandis que les restes avec aryle peuvent à leur tour porter un à trois des groupes suivants: cyano, nitro, halogéno, alkyle en C₁-C₄, halogénoalkyle en C₁-C₄, alcoxy en C₁-C₄, halogénoalcoxy en C₁-C₄, alkylthio en C₁-C₄ et halogénoalkylthio en C₁-C₄, et
b) un composé de formule II, 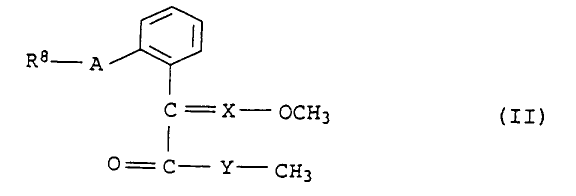 où les restes ont la signification suivante:
R⁸ phényle, qui peut porter un à trois des groupes suivants: cyano, halogéno, alkyle en C₁-C₄, halogénoalkyle en C₁-C₂ et alcoxy en C₁-C₄, ou
pyrimidyle, qui peut porter un groupe alkyle en C₁-C₃ et/ou un groupe phénoxy, tandis que le groupe phénoxy peut à son tour porter un à trois des substituants suivants: cyano, halogéno, alkyle en C₁-C₄, halogénoalkyle en C₁-C₂ et alcoxy en C₁-C₄,
A oxygène ou oxyméthylène (-OCH₂-),
X CH ou N,
Y oxygène ou NR, tandis que R désigne l'hydrogène ou un groupe alkyle en C₁-C₃ ou alcoxy en C₁-C₃,
en une quantité à efficacité synergique.

2. Mélange fongicide selon la revendication 1, caractérisé par le fait que le rapport en poids du composé I au composé II est de 10:1 à 0,1:1.

3. Procédé pour lutter contre les champignons nuisibles, caractérisé par le fait qu'on traite les champignons nuisibles, leur biotope ou les plantes, semences, sols, surfaces, matériels ou espaces devant en être exemptés avec un composé de formule I et un composé II selon la revendication 1.

4. Procédé selon la revendication 3, caractérisé par le fait qu'on met en oeuvre le composé I et le composé II simultanément, et en pratique ensemble ou séparément, ou successivement.

5. Utilisation de l'un des composés I selon la revendication 1 pour la préparation de mélanges à activité fongicide synergique selon la revendication 1.

6. Utilisation de l'un des composés II selon la revendication 1 pour la préparation de mélanges à activité fongicide synergique selon la revendication 1.
